# EUROPEAN PATENT SPECIFICATION

(11) **EP 4 109 589 B1**
(45) Date of publication and mention of the grant of the patent: **09.12.2026**
(21) Application number: 22759965.1
(22) Date of filing: 15.02.2022
(51) Int. Cl.: H01M 4/131, H01M 4/62, H01M 10/42, H01M 4/525, H01M 4/505, H01M 4/36, H01M 4/587, H01M 4/38, H01M 4/48, H01M 4/58, H01M 10/052

(54) **ELECTRODE ASSEMBLY HAVING HIGH ENERGY DENSITY AND LITHIUM SECONDARY BATTERY COMPRISING SAME**
ELEKTRODENANORDNUNG MIT HOHER ENERGIEDICHTE UND LITHIUMSEKUNDÄRBATTERIE DAMIT
ENSEMBLE D'ÉLECTRODES AYANT UNE DENSITÉ D'ÉNERGIE ÉLEVÉE ET BATTERIE SECONDAIRE AU LITHIUM LE COMPRENANT

(30) Priority: 23.02.2021 KR 20210024271
(43) Date of publication of application: 28.12.2022
(73) Proprietor: LG Energy Solution, Ltd., Seoul 07335 (KR)
(72) Inventor: KIM, Shul Kee, Daejeon 34122 (KR); OH, Sang Seung, Daejeon 34122 (KR); KIM, Hye Hyeon, Daejeon 34122 (KR); LIM, Sung Chul, Daejeon 34122 (KR); JO, Chi Ho, Daejeon 34122 (KR)
(74) Representative: Hoffmann Eitle
(86) International application number: PCT/KR2022/002238
(87) International publication number: WO 2022/182047

(56) References cited:
- EP-A1- 3 605 678
- CN-A- 112 028 065
- JP-B2- 6 652 125
- KR-A- 20180 023 820
- KR-A- 20180 058 119
- KR-A- 20190 079 534
- KR-A- 20210 013 253
- US-A1- 2018 062 158
- DOSE WESLEY M. ET AL: "Beneficial Effect of Li5FeO4 Lithium Source for Li-Ion Batteries with a Layered NMC Cathode and Si Anode", JOURNAL OF THE ELECTROCHEMICAL SOCIETY, vol. 167, no. 16, 23 December 2020 (2020-12-23), Pennington, NJ, pages 160543, XP093311804, ISSN: 0013-4651, DOI: 10.1149/1945-7111/abd1ef

## Description

### [Technical Field]

The present disclosure relates to an electrode assembly having a high energy density and a lithium secondary battery including the same.

### [Background Art]

As interest in environmental issues has increased in recent years, many studies have been conducted on electric vehicles (EVs), hybrid electric vehicles (HEVs), and the like which are able to replace vehicles using fossil fuels, such as gasoline and diesel vehicles, which are one of the main causes of air pollution. Although nickel-metal hydride (Ni-MH) secondary batteries have been mainly used as a power source of the EVs, HEVs, and the like, studies on lithium secondary batteries having a high energy density, high discharge voltage, and output stability are being actively conducted, and some of them have been commercialized.

As a negative electrode material for the lithium secondary batteries, graphite has been mainly used. However, since graphite has a low capacity per unit mass of 372 mAh/g, it is difficult to increase the capacity of lithium secondary batteries. In order to increase the capacity of lithium secondary batteries, as a non-carbon-based negative electrode material having a higher energy density than graphite, a negative electrode material that forms a lithium-metal compound, such as silicon, tin, an oxide thereof, and the like, has been developed and used. The non-carbon-based negative electrode material has high capacity, but the initial efficiency thereof is low, so a large amount of lithium is consumed during initial charging and discharging, and irreversible capacity loss is large.

As a positive electrode material for the lithium secondary batteries, lithium-containing cobalt oxides (LiCoO₂) have been mainly used. Also, lithium-containing manganese oxides such as LiMnO₂ having a layered crystal structure, LiMn₂O₄ having a spinel crystal structure, and the like and lithium-containing nickel oxides (LiNiO₂) have been considered.

Although LiCoO₂ is currently widely used due to having excellent overall properties such as cycle characteristics and the like, it has low safety and is expensive due to the resource limitations of cobalt as a raw material, and thus there is a limitation in using it in large quantities as a power source in fields such as electric vehicles and the like. Also, LiNiO₂ has a difficulty in application to an actual mass production process at a reasonable cost due to the characteristics of its manufacturing method, and lithium plating (Li plating) is induced on a negative electrode due to gas generated during charging and discharging, and thus there is a limitation in that both safety and charge/discharge capacity are degraded.

EP 3 605 678 A1 describes a lithium secondary battery, comprising: an anode composed of a single layer of an anode current collector; a cathode containing a cathode mixture formed on a cathode current collector; a separator interposed between the anode and the cathode; and an electrolyte, wherein the cathode mixture comprises an irreversible compensating additive.

US 2018/062158 A1 describes a negative electrode for a lithium secondary battery that includes a negative electrode current collector; a first negative electrode mixture layer containing a first negative electrode active material, a first polymer binder and a first conductive material and formed on at least one surface of the negative electrode current collector; and a second negative electrode mixture layer containing a second negative electrode active material, a second polymer binder and a second conductive material and formed on an upper surface of the first negative electrode mixture layer, wherein the first negative electrode active material contains natural graphite and silicon oxide, and the second negative electrode active material contains artificial graphite.

CN 112 028 065 A describes a SiOx-SiC-C/G silicon carbon composite material for lithium ion battery cells comprising a graphite inner core, and a SiOx layer, a SiC layer and an amorphous carbon layer coated layer by layer on the surface of the graphite inner core layer.

### [Related-Art Documents]

Korean Laid-Open Patent Publication No. 10-2014-0046496

### [Disclosure]

### [Technical Problem]

An object of the present disclosure is to provide a lithium secondary battery having a high energy density and enhanced safety.

### [Technical Solution]

One aspect of the present disclosure provides an electrode assembly which includes:
a positive electrode including a positive electrode mixture layer including, with respect to a total of 100 parts by weight of the positive electrode mixture layer, 85 to 95 parts by weight of a positive electrode active material including a lithium nickel cobalt oxide represented by the following Chemical Formula 1 and 0.1 to 5 parts by weight of a positive electrode additive including any one or more of a lithium cobalt oxide represented by the following Chemical Formula 2 and a lithium iron oxide represented by the following Chemical Formula 3;
a negative electrode including a negative electrode mixture layer including, with respect to a total of 100 parts by weight of a negative electrode active material, 80 to 95 parts by weight of graphite and 1 to 20 parts by weight of silicon (Si)-containing particles;
a separator interposed between the positive electrode and the negative electrode; and
wherein the positive electrode mixture layer further comprises a first positive electrode mixture layer and a second positive electrode mixture layer that are sequentially stacked on a positive electrode current collector and satisfies the following Expression 1 and Expression 2: [Expression 1] $0.05 \leq {SCM}_{1 st} / {SCM}_{2 nd} \leq 0.9$ [Expression 2] $2 \leq D 1 st / D 2 nd \leq 15$
in Expression 1,
SCM₁ₛₜ represents an amount of the positive electrode additive included in the first positive electrode mixture layer, and
SCM_{2nd} represents an amount of the positive electrode additive included in the second positive electrode mixture layer
in Expression 2,
D₁ₛₜ represents an average thickness of the first positive electrode mixture layer, and
D_{2nd} represents an average thickness of the second positive electrode mixture layer:

   [Chemical Formula 1] Liₓ[Ni_{y}Co_{z}Mn_{w}M¹ᵥ]O₂

   [Chemical Formula 2] LiₚCo_{1-q}M²_{q}O₄

   [Chemical Formula 3] LiₐFe_{1-b}M³_{b}O₄
in Chemical Formula 1 to Chemical Formula 3,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v satisfy 1.0≤x≤1.30, 0≤y<1, 0<z≤0.6, 0<w≤0.6, and 0≤v≤0.2, respectively,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q satisfy 5≤p≤7 and 0≤q≤0.2, respectively,
M³ is one or more selected from among Al, Mg, Ni, Co, Mn, Ti, Ga, Cu, V, Nb, Zr, Ce, In, Zn, and Y, and
a and b satisfy 4≤a≤6 and 0≤b≤0.5, respectively.

Here, the positive electrode mixture layer may satisfy a condition of: [Expression 1] $0.02 \leq {SCM}_{1 st} / {SCM}_{2 nd} \leq 0.8 .$

In addition, the positive electrode mixture layer may satisfy a condition of: [Expression 2] $2 \leq {D}_{1 st} / {D}_{2 nd} \leq 8 .$

In addition, the positive electrode mixture layer may have an average thickness of 100 µm to 200 µm.

In addition, the positive electrode mixture layer may further include one or more conductive materials selected from the group consisting of natural graphite, artificial graphite, carbon black, acetylene black, Ketjen black, and a carbon fiber, and the conductive material may be included in an amount of 0.1 to 10 parts by weight with respect to 100 parts by weight of the positive electrode mixture layer.

In addition, any one or more of the positive electrode mixture layer and the negative electrode mixture layer may include any one or more binders selected from the group consisting of a vinylidene fluoride-hexafluoropropylene copolymer, polyvinylidene fluoride, polyacrylonitrile, polymethyl methacrylate, polyvinyl alcohol, carboxymethylcellulose, starch, hydroxypropyl cellulose, regenerated cellulose, polyvinylpyrrolidone, polytetrafluoroethylene, polyethylene, polypropylene, polyacrylic acid, an ethylene-propylene-diene monomer, a sulfonated ethylene-propylene-diene monomer, styrene butadiene rubber, and fluoro-rubber.

In addition, the binder may be included in an amount of 0.1 to 10 parts by weight with respect to 100 parts by weight of the positive electrode mixture layer or the negative electrode mixture layer.

In addition, the negative electrode mixture layer may include the silicon (Si)-containing particles in an amount of 1 to 9 parts by weight or 11 to 19 parts by weight with respect to a total of 100 parts by weight of a negative electrode active material.

In addition, the silicon (Si)-containing particles included in the negative electrode mixture layer may include one or more of silicon (Si) particles, silicon monoxide (SiO) particles, and silicon dioxide (SiO₂) particles. In some cases, the silicon (Si)-containing particles may further include silicon carbide (SiC) particles.

In addition, the silicon (Si)-containing particles may have an average particle size of 0.01 µm to 10 µm.

Another aspect of the present disclosure provides a lithium secondary battery including the electrode assembly.

Still another aspect of the present disclosure provides a battery module including the lithium secondary battery.

### [Advantageous Effects]

Since an electrode assembly according to the present disclosure includes a positive electrode in which a positive electrode mixture layer includes a specific positive electrode active material and a specific positive electrode additive and a negative electrode in which a negative electrode mixture layer includes a specific amount of graphite mixed with silicon (Si)-containing particles, the amount of gas generated during charging and discharging of a battery is reduced, the resistance change rate of the electrode is low even after charging and discharging, and accordingly, a lithium secondary battery including the electrode assembly has a high energy density, a long lifetime, and good quick charging efficiency.

### [Detailed Description of the Preferred Embodiments]

Hereinafter, the present disclosure will be described in more detail.

### Electrode assembly

One aspect of the present disclosure provides an electrode assembly which includes:
a positive electrode including a positive electrode mixture layer including, with respect to a total of 100 parts by weight of the positive electrode mixture layer, 85 to 95 parts by weight of a positive electrode active material including a lithium nickel cobalt oxide represented by the following Chemical Formula 1 and 0.1 to 5 parts by weight of a positive electrode additive including any one or more of a lithium cobalt oxide represented by the following Chemical Formula 2 and a lithium iron oxide represented by the following Chemical Formula 3;
a negative electrode including a negative electrode mixture layer including, with respect to a total of 100 parts by weight of a negative electrode active material, 80 to 95 parts by weight of graphite and 1 to 20 parts by weight of silicon (Si)-containing particles;
a separator interposed between the positive electrode and the negative electrode; and
wherein the positive electrode mixture layer further comprises a first positive electrode mixture layer and a second positive electrode mixture layer that are sequentially stacked on a positive electrode current collector and satisfies the following Expression 1 and Expression 2: [Expression 1] $0.05 \leq {SCM}_{1 st} / {SCM}_{2 nd} \leq 0.9$ [Expression 2] $2 \leq D 1 st / D 2 nd \leq 15$
in Expression 1,
SCM₁ₛₜ represents an amount of the positive electrode additive included in the first positive electrode mixture layer, and
SCM_{2nd} represents an amount of the positive electrode additive included in the second positive electrode mixture layer
in Expression 2,
D₁ₛₜ represents an average thickness of the first positive electrode mixture layer, and
D_{2nd} represents an average thickness of the second positive electrode mixture layer:

   [Chemical Formula 1] Liₓ[Ni_{y}Co_{z}Mn_{w}M¹ᵥ]O₂

   [Chemical Formula 2] LiₚCo_{1-q}M²_{q}O₄

   [Chemical Formula 3] LiₐFe_{1-b}M³_{b}O₄
in Chemical Formula 1 to Chemical Formula 3,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v satisfy 1.0≤x≤1.30, 0≤y<1, 0<z≤0.6, 0<w≤0.6, and 0≤v≤0.2, respectively,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q satisfy 5≤p≤7 and 0≤q≤0.2, respectively,
M³ is one or more selected from among Al, Mg, Ni, Co, Mn, Ti, Ga, Cu, V, Nb, Zr, Ce, In, Zn, and Y, and
a and b satisfy 4≤a≤6 and 0≤b≤0.5, respectively.

The electrode assembly according to the present disclosure has a structure including a positive electrode, a negative electrode, and a separator interposed between the positive electrode and the negative electrode, and the positive electrode has a form in which a positive electrode mixture layer is positioned on a positive electrode current collector, and the positive electrode mixture layer includes a positive electrode active material that exhibits activity and a positive electrode additive that imparts irreversible capacity. Specifically, the positive electrode mixture layer includes a lithium nickel cobalt oxide represented by the following Chemical Formula 1 as a positive electrode active material capable of reversible intercalation and deintercalation:

[Chemical Formula 1] Liₓ[Ni_{y}Co_{z}Mn_{w}M¹ᵥ]O₂

in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v satisfy 1.0≤x≤1.30, 0≤y<1, 0<z≤0.6, 0<w≤0.6, and 0≤v≤0.2, respectively.

The lithium nickel cobalt oxide represented by Chemical Formula 1 is a composite metal oxide including lithium and nickel, and may include one or more compounds selected from the group consisting of LiCoO₂, LiCo_{0.5}Zn_{0.5}O₂, LiCo_{0.7}Zn_{0.3}O₂, LiNiO₂, LiNi_{0.5}Co_{0.5}O₂, LiNi_{0.6}Co_{0.4}O₂, LiNi_{1/3}Co_{1/3}Al_{1/3}O₂, LiMnO₂, LiNi_{1/3}Co_{1/3}Mn_{1/3}O₂, LiNi_{0.8}Co_{0.1}Mn_{0.1}O₂, and LiNi_{0.7}Co_{0.1}Mn_{0.1}Al_{0.1}O₂.

As an example, the positive electrode active material may include LiCoO₂, LiCo_{0.7}Zn_{0.3}O₂, LiNi_{0.5}Co_{0.5}O₂, or LiNi_{0.8}Co_{0.1}Mn_{0.1}O₂ alone or in combination as the lithium nickel cobalt oxide represented by Chemical Formula 1.

In addition, the positive electrode active material is included in an amount of 85 to 95 parts by weight, specifically, 88 to 95 parts by weight, 90 to 95 parts by weight, 86 to 90 parts by weight, or 92 to 95 parts by weight with respect to 100 parts by weight of the positive electrode mixture layer.

Additionally, the positive electrode mixture layer includes a positive electrode additive including any one or more of a lithium cobalt oxide represented by Chemical Formula 2 and a lithium iron oxide represented by the following Chemical Formula 3:

[Chemical Formula 2] LiₚCo_{1-q}M²_{q}O₄

[Chemical Formula 3] LiₐFe_{1-b}M³_{b}O₄

in Chemical Formula 2 and Chemical Formula 3,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q satisfy 5≤p≤7 and 0≤q≤0.2, respectively,
M³ is one or more selected from among Al, Mg, Ni, Co, Mn, Ti, Ga, Cu, V, Nb, Zr, Ce, In, Zn, and Y, and
a and b satisfy 4≤a≤6 and 0≤b≤0.5, respectively.

Since the positive electrode additive contains an excessive amount of lithium, it is able to provide lithium for lithium consumption that occurs due to irreversible chemical/physical reactions in a negative electrode during initial charging. Accordingly, the charge capacity of a battery is increased, and irreversible capacity is decreased, and thus lifespan characteristics may be improved.

In the present disclosure, any one or more of the lithium cobalt oxide represented by Chemical Formula 2 and the lithium iron oxide represented by Chemical Formula 3 are included as the positive electrode additive, wherein the lithium cobalt oxide represented by Chemical Formula 2 may include Li₆CoO₄, Li₆Co_{0.5}Zn_{0.5}O₄, Li₆Co_{0.7}Zn_{0.3}O₄, or the like, and the lithium iron oxide represented by Chemical Formula 3 may include Li₂FeSiO₄, Li₅FeO₄, Li₆FeO₄, or the like.

In addition, the positive electrode additive is included in an amount of 0.1 to 5 parts by weight, specifically, 0.1 to 3 parts by weight or 1 to 3 parts by weight with respect to a total of 100 parts by weight of the positive electrode mixture layer. When the lithium cobalt oxide and the lithium iron oxide are used in combination, the lithium iron oxide may be used in an amount of 50 to 200 parts by weight with respect to 100 parts by weight of the lithium nickel cobalt oxide. In the present disclosure, by adjusting an amount of the positive electrode additive as described above, the amount of gas generated during subsequent charging and discharging can be reduced while maximizing the initial charge capacity of a battery.

Additionally, the positive electrode additive may include a coating layer on the surface thereof, and the coating layer may be a carbon coating layer or a conductive polymer layer. The carbon coating layer may be formed by carbonizing an organic solvent remaining on the surface in preparation of a positive electrode additive or by performing separate treatment with glucose, sucrose, galactose, fructose, lactose, starch, mannose, ribose, aldohexose, ketohexose, or a mixture thereof and then carbonization. In some cases, the carbon coating layer may be formed by mixing the prepared positive electrode additive with a carbon material such as graphite, graphene, carbon nanotubes (CNTs), or the like and thermally treating the resulting mixture.

The conductive polymer layer may be formed by mixing 1 to 10 parts by weight of a conductive polymer (e.g., polyaniline, polythiophene, polypyrrole, or a copolymer thereof) with respect to 100 parts by weight of the positive electrode additive and drying the resulting mixture.

In addition, the coating layer may have an average thickness of 20 nm or less, specifically, 5 nm to 15 nm or 7 nm to 12 nm.

In the present disclosure, the electrical conductivity of the positive electrode additive may be enhanced by introducing the above-described carbon coating layer and/or conductive polymer layer onto the surface of the positive electrode additive.

Furthermore, the positive electrode mixture layer may further include a conductive material and a binder in addition to the positive electrode active material and the positive electrode additive.

As the conductive material, one or more selected from the group consisting of natural graphite, artificial graphite, carbon black, acetylene black, Ketjen black, and a carbon fiber may be included. For example, the conductive material may be acetylene black.

In addition, the conductive material may be included in an amount of 0.1 to 10 parts by weight, specifically, 0.1 to 8 parts by weight, 0.1 to 5 parts by weight, 0.1 to 3 parts by weight, or 2 to 6 parts by weight with respect to a total of 100 parts by weight of the positive electrode mixture layer. In the present disclosure, by controlling an amount of the conductive material within the above-described range, charge capacity can be prevented from being degraded by an increase in electrode resistance due to a small amount of conductive material, and problems in that charge capacity is degraded by a decrease in amounts of the positive electrode active material and the positive electrode additive due to an excessive amount of conductive material or in that quick charging characteristics are degraded due to an increase in the loading amount of the positive electrode mixture layer can be prevented.

The binder is a component that aids in the binding of the active material, the conductive material, and the like to one another and to a current collector and may be appropriately applied within a range that does not degrade the electrical properties of the electrode. Specifically, the binder may include any one or more selected from the group consisting of a vinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer, a sulfonated ethylene-propylene-diene monomer, styrene butadiene rubber, and fluoro-rubber.

As an example, the binder may be a vinylidene fluoride-hexafluoropropylene copolymer and/or polyvinylidene fluoride.

The binder may be included in an amount of 0.1 to 10 parts by weight, specifically, 0.1 to 8 parts by weight, 0.1 to 5 parts by weight, 0.1 to 3 parts by weight, or 2 to 6 parts by weight with respect to a total of 100 parts by weight of the positive electrode mixture layer. In the present disclosure, by controlling an amount of the binder included in the positive electrode mixture layer within the above-described range, the adhesion of the mixture layer can be prevented from being degraded due to a small amount of binder, or the electrical properties of the electrode can be prevented from being degraded due to an excessive amount of binder.

Furthermore, the positive electrode mixture layer has a double-layer structure in which a first positive electrode mixture layer and a second positive electrode mixture layer are sequentially stacked on a positive electrode current collector and satisfies the following Expression 1: [Expression 1] $0.05 \leq {SCM}_{1 st} / {SCM}_{2 nd} \leq 0.9$ in Expression 1,
SCM₁ₛₜ represents an amount of the positive electrode additive included in the first positive electrode mixture layer, and
SCM_{2nd} represents an amount of the positive electrode additive included in the second positive electrode mixture layer.

Expression 1 shows a ratio of the positive electrode additives included in the first positive electrode mixture layer and the second positive electrode mixture layer and means that the amount of the positive electrode additive included in the second positive electrode mixture layer (i.e., the amount of the lithium cobalt oxide represented by Chemical Formula 2) is larger than the amount of the positive electrode additive included in the first positive electrode mixture layer. The positive electrode mixture layer according to the present disclosure may satisfy Expression 1 as 0.1 to 0.9 (e.g., 0.1≤SCM₁ₛₜ/SCM_{2nd}≤0.9), 0.2 to 0.8 (e.g., 0.2≤SCM₁ₛₜ/SCM_{2nd}≤0.8), 0.3 to 0.7 (e.g., 0.3≤SCM₁ₛₜ/SCM_{2nd}≤0.7), or 0.4 to 0.8 (e.g., 0.4≤SCM₁ₛₜ/SCM_{2nd}≤0.8). When the positive electrode mixture layer according to the present disclosure satisfies a condition of Expression 1, the irreversible reaction efficiency of the positive electrode additive during initial charging may be improved.

In addition, the positive electrode mixture layer may have an average thickness of 100 µm to 200 µm, specifically, 100 µm to 180 µm, 100 µm to 150 µm, 120 µm to 200 µm, 140 µm to 200 µm, or 140 µm to 160 µm.

Additionally, the positive electrode mixture layer satisfies a condition of the following Expression 2: [Expression 2] $2 \leq {D}_{1 st} / {D}_{2 nd} \leq 15$ in Expression 2,
D₁ₛₜ represents an average thickness of the first positive electrode mixture layer, and
D_{2nd} represents an average thickness of the second positive electrode mixture layer.

Expression 2 shows a ratio of the average thickness of the first positive electrode mixture layer and the average thickness of the second positive electrode mixture layer and means that the average thickness of the first positive electrode mixture layer is higher than the average thickness of the second positive electrode mixture layer. The positive electrode mixture layer according to the present disclosure may satisfy Expression 2 as 2 to 13 (e.g., 2≤D₁ₛₜ/D_{2nd}≤13), 2 to 10 (e.g., 2≤D₁ₛₜ/D_{2nd}≤10), 2 to 8 (e.g., 2≤D₁ₛₜ/D_{2nd}≤8), 5 to 10 (e.g., 5≤D₁ₛₜ/D_{2nd}≤10), 4 to 7 (e.g., 4≤D₁ₛₜ/D_{2nd}≤7), or 2 to 5 (e.g., 2≤D₁ₛₜ/D_{2nd}≤5). When the positive electrode mixture layer according to the present disclosure satisfies a condition of Expression 2, the irreversible reaction efficiency of the positive electrode additive during initial charging may be improved.

As an example, the positive electrode mixture layer may satisfy Expression 1 as 0.4 to 0.6 (e.g., 0.4≤SCM₁ₛₜ/SCM_{2nd}≤0.6) and satisfy Expression 2 as 2 to 4 (e.g., 2≤D₁ₛₜ/D_{2nd}≤4). **In** this case, the positive electrode mixture layer may have a structure in which the first positive electrode mixture layer in contact with a positive electrode current collector is thickly formed while a small amount of the positive electrode additive is uniformly dispersed, and the second positive electrode mixture layer positioned on the first positive electrode mixture layer is thinly formed while a large amount of the positive electrode additive is uniformly dispersed. Due to this structure, high charge capacity during initial charging and irreversible capacity may be achieved at the same time.

In addition, the positive electrode may use a positive electrode current collector that does not cause a chemical change in a battery and has high conductivity. For example, stainless steel, aluminum, nickel, titanium, calcined carbon, or the like may be used, and aluminum or stainless steel whose surface has been treated with carbon, nickel, titanium, silver, or the like may also be used. Also, the positive electrode current collector may have fine irregularities formed on the surface thereof to increase the adhesion of the positive electrode active material and may be used in any of various forms such as a film, a sheet, a foil, a net, a porous material, a foam, a non-woven fabric, and the like. Also, the average thickness of the positive electrode current collector may be appropriately applied in the range of 3 to 500 µm in consideration of the conductivity and total thickness of a positive electrode to be manufactured.

In addition, the negative electrode is manufactured by applying a negative electrode active material on a negative electrode current collector and performing drying and pressing and may optionally further include the conductive material, the binder, and the like included in the positive electrode mixture layer as necessary.

In this case, the negative electrode active material may include both graphite and silicon (Si)-containing particles, and the graphite may include any one or more of natural graphite having a layered crystal structure and artificial graphite having an isotropic structure.

The silicon (Si)-containing particles are particles including silicon (Si) as a main metal component and may include silicon (Si) particles, silicon monoxide (SiO) particles, silicon dioxide (SiO₂) particles, or a mixture thereof. In some cases, the silicon (Si)-containing particles may further include silicon carbide (SiC) particles in addition to silicon (Si) particles, silicon monoxide (SiO) particles, and/or silicon dioxide (SiO₂) particles, wherein the silicon carbide (SiC) particles may be included in an amount of 0.1 to 20 parts by weight with respect to a total of 100 parts by weight of the silicon (Si)-containing particles.

In addition, the particles may have a porous structure including open pores, and the average particle size (D₅₀) thereof may be 0.01 µm to 10 µm. For example, the silicon (Si)-containing particles may have an average particle size (D₅₀) of 0.01 µm to 8 µm, 0.01 µm to 6 µm, 0.01 µm to 4 µm, 0.01 µm to 2 µm, 0.1 µm to 6 µm, 0.1 µm to 2 µm, 0.1 µm to 0.9 µm, 1 µm to 8 µm, 2 µm to 6 µm, 2 µm to 4 µm, 1 µm to 3 µm, or 0.05 µm to 0.9 µm. In the present disclosure, by adjusting the average particle size (D₅₀) of the silicon (Si)-containing particles within the above-described range, an expansion rate of silicon (Si)-containing particles during charging can be lowered, and the degradation of a battery can be improved.

Additionally, the silicon (Si)-containing particles may have a form in which crystalline particles and amorphous particles are mixed, and the proportion of amorphous particles may be 50 to 100 parts by weight, specifically, 50 to 90 parts by weight, 60 to 80 parts by weight, or 85 to 100 parts by weight with respect to a total of 100 parts by weight of the silicon (Si)-containing particles. In the present disclosure, by controlling the proportion of amorphous particles included in the silicon (Si)-containing particles within the above-described range, thermal stability and flexibility can be enhanced without degrading the electrical properties of the electrode.

In addition, the negative electrode active material includes, with respect to a total of 100 parts by weight, 80 to 95 parts by weight of graphite and 1 to 20 parts by weight of silicon (Si)-containing particles. More specifically, the negative electrode active material may include, with respect to a total of 100 parts by weight, 85 to 95 parts by weight, 90 to 95 parts by weight, 88 to 92 parts by weight, or 92 to 94 parts by weight of graphite and 1 to 9 parts by weight, 3 to 7 parts by weight, 11 to 19 parts by weight, or 13 to 17 parts by weight of silicon (Si)-containing particles. In the present disclosure, by adjusting the amounts of graphite and silicon (Si)-containing particles included in the negative electrode active material within the above-described ranges, the amount of lithium consumed during initial charging and discharging of a battery and irreversible capacity loss can be reduced, and charge capacity per unit mass can be enhanced.

Meanwhile, the negative electrode mixture layer may have a double-layer structure in which a first negative electrode mixture layer and a second negative electrode mixture layer are sequentially stacked on a negative electrode current collector, and the first negative electrode mixture layer and the second negative electrode mixture layer may each be formed so that graphite and silicon (Si)-containing particles are uniformly mixed or may be composed of a graphite layer and a silicon (Si)-mixed layer (i.e., a layer formed by mixing graphite and silicon (Si)-containing particles), respectively. When a graphite layer and a silicon (Si)-mixed layer are used as the first negative electrode mixture layer and the second negative electrode mixture layer, respectively, since the graphite layer is positioned between the negative electrode current collector and the silicon (Si)-mixed layer, an area in which the silicon (Si)-mixed layer which is a uppermost layer is in contact with a liquid electrolyte and/or an electrolyte may be increased, and thus the diffusion of lithium ions may be enhanced.

In addition, when a silicon (Si)-mixed layer and a graphite layer are used as the first negative electrode mixture layer and the second negative electrode mixture layer, respectively, the silicon (Si)-mixed layer is in contact with the negative electrode current collector. In this case, since the silicon (Si)-mixed layer is positioned between the negative electrode current collector and the graphite layer, the loading amount of a negative electrode active material and the average thickness of the negative electrode mixture layer may be reduced, the capture of lithium ions in the silicon (Si)-mixed layer during charging may be improved, and the volume of silicon (Si)-containing particles may be suppressed from being expanded, thereby further enhancing the lifetime of a battery.

Additionally, the negative electrode mixture layer may have an average thickness of 100 µm to 200 µm, specifically, 100 µm to 180 µm, 100 µm to 150 µm, 120 µm to 200 µm, 140 µm to 200 µm, or 140 µm to 160 µm.

In addition, the negative electrode may include a negative electrode current collector that does not cause a chemical change in a battery and has high conductivity. For example, as the negative electrode current collector, copper, stainless steel, nickel, titanium, calcined carbon, or the like may be used, and copper or stainless steel whose surface has been treated with carbon, nickel, titanium, silver, or the like may also be used. Also, like the positive electrode current collector, the negative electrode current collector may have fine irregularities formed on the surface thereof to increase the adhesion of a negative electrode active material and may be used in any of various forms such as a film, a sheet, a foil, a net, a porous material, a foam, a non-woven fabric, and the like. Also, the average thickness of the negative electrode current collector may be appropriately applied in the range of 3 to 500 µm in consideration of the conductivity and total thickness of a negative electrode to be manufactured.

Furthermore, the separator is interposed between the positive electrode and the negative electrode, and an insulating thin film having high ion permeability and mechanical strength is used. Although the separator is not particularly limited as long as it is commonly used in the art, specifically, a sheet or non-woven fabric made of chemical-resistant and hydrophobic polypropylene, glass fiber, polyethylene, or the like may be used, and in some cases, a composite separator in which a porous polymer substrate such as the sheet or non-woven fabric is coated with inorganic particles/organic particles by an organic binder polymer may be used. When a solid electrolyte such as a polymer or the like is used as an electrolyte, the solid electrolyte may serve as the separator. Also, the separator may have an average pore diameter of 0.01 to 10 µm and an average thickness of 5 to 300 µm.

Meanwhile, the electrode assembly may be accommodated in a cylindrical battery, a prismatic battery, or a pouch-type battery while being wound in the form of a jelly roll or accommodated in a folding or stack-folding type in a pouch-type battery, but the present disclosure is not limited thereto.

### Lithium secondary battery

Another aspect of the present disclosure provides a lithium secondary battery including the above-described electrode assembly.

The lithium secondary battery according to the present disclosure may have a structure in which the electrode assembly is impregnated with a lithium salt-containing liquid electrolyte.

In this case, the lithium salt-containing liquid electrolyte may consist of a liquid electrolyte and a lithium salt. As the liquid electrolyte, a non-aqueous organic solvent, an organic solid electrolyte, an inorganic solid electrolyte, or the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, or the like may be used.

As the organic solid electrolyte, for example, polyethylene derivatives, polyethylene oxide derivatives, polypropylene oxide derivatives, phosphoric acid ester polymers, poly alginate lysine, polyester sulfide, polyvinyl alcohol, polyvinylidene fluoride, polymers including ionic dissociation groups, or the like may be used.

As the inorganic solid electrolyte, for example, nitrides, halides, or sulfates of Li, such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like, may be used.

The lithium salt is a substance that is readily soluble in a non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, lithium imide, or the like may be used.

In addition, in order to improve charging/discharging characteristics, flame retardancy, and the like, for example, pyridine, triethylphosphite, triethanolamine, cyclic ether, ethylenediamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the liquid electrolyte. In some cases, a halogen-containing solvent such as carbon tetrachloride, ethylene trifluoride, or the like may be further included to impart incombustibility, carbon dioxide gas may be further included to enhance high-temperature storage characteristics, and fluoro-ethylene carbonate (FEC), propene sultone (PRS), or the like may be further included.

### Battery module

Still another aspect of the present disclosure provides a battery module including the above-described secondary battery as a unit cell and also provides a battery pack including the battery module.

The battery pack may be used as power sources of medium-to-large-sized devices that require high-temperature stability, long cycle characteristics and high rate characteristics etc., and specific examples of the medium-to-large-sized devices include: power tools powered by electric motors; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; power storage systems; and the like, and more specific examples thereof include HEVs, but the present disclosure is not limited thereto.

Hereinafter, the present disclosure will be described in more detail with reference to examples and experimental examples.

### Examples 1 to 4 and Comparative Examples 1 to 4. Manufacture of electrode assembly

An N-methyl pyrrolidone solvent was input into a homo mixer. In order to form a first positive electrode mixture layer and a second positive electrode mixture layer, LiNi_{0.8}Co_{0.1}Mn_{0.1}O₂ as a positive electrode active material, carbon black as a conductive material, PVdF as a binder, and Li₆CoO₄ as a positive electrode additive were weighed as shown in Table 1 below, then input thereinto, and mixed at 3,000 rpm for 60 minutes to prepare a slurry for forming a first positive electrode mixture layer and a slurry for forming a second positive electrode mixture layer.

In addition, natural graphite and silicon (Si)-containing particles as negative electrode active materials and styrene butadiene rubber (SBR) as a binder were prepared, and a slurry for forming a first negative electrode mixture layer and a slurry for forming a second negative electrode mixture layer were prepared in the same manner as the method of preparing the slurry for forming the positive electrode mixture layer. In this case, graphite used in the formation of a negative electrode mixture layer was natural graphite, and the silicon (Si)-containing particles had an average particle size of 0.9 to 1.1 µm.

The prepared slurry for forming a first positive electrode mixture layer was applied on one surface of an aluminum current collector, the slurry for forming a second positive electrode mixture layer was subsequently applied thereon, and then drying at 100 °C and pressing were performed to manufacture a positive electrode. In this case, a total thickness of the positive electrode mixture layers was 130 µm, and a total thickness of the manufactured positive electrode was about 200 µm.

In addition, the prepared slurry for forming a first negative electrode mixture layer was applied on one surface of a copper current collector, the slurry for forming a second negative electrode mixture layer was subsequently applied thereon, and then drying at 100 °C and pressing were performed to manufacture a negative electrode. In this case, a total thickness of the negative electrode mixture layers was 150 µm, and a total thickness of the manufactured negative electrode was about 180 µm.

Afterward, a separator (thickness: about 16 µm) made of a porous polyethylene (PE) film was interposed between the manufactured positive electrode and negative electrode, and E2DVC as a liquid electrolyte was injected to fabricate a full cell.

Here, "E2DVC" is a type of a carbonate-based liquid electrolyte and refers to a solution obtained by mixing a mixture of ethylene carbonate (EC):dimethyl carbonate (DMC):diethyl carbonate (DEC) (volume ratio of 1:1:1) with lithium hexafluorophosphate (LiPF₆, 1.0 M) and vinyl carbonate (VC, 2 wt%).

**[Table 1]**

| Component amount [units: parts by weight] | | Examples | | | | Comparative Examples | | | |
|---|---|---|---|---|---|---|---|---|---|
| | | 1 | 2 | 3 | 4 | 1 | 2 | 3 | 4 |
| First positive electrode mixture layer | LiNi_{0.8}Co_{0.1}Mn_{0.1}O₂ | 77.3 | 77.3 | 77.3 | 77.3 | 77.3 | 77.3 | 31.0 | 86.3 |
| | Carbon black | 2.5 | 2.5 | 2.5 | 2.5 | 2.5 | 2.5 | 1.0 | 2.8 |
| | PVdF | 1.6 | 1.6 | 1.6 | 1.6 | 1.6 | 1.6 | 0.7 | 1.9 |
| | LiₑCoO₄ | 0.5 | 0.5 | 0.5 | 0.5 | 0.1 | 1.5 | 0.5 | 0.5 |
| Second positive electrode mixture layer | LiNi_{0.8}Co_{0.1}Mn_{0.1}O₂ | 15.2 | 15.2 | 15.2 | 15.2 | 15.2 | 15.2 | 61.5 | 6.2 |
| | Carbon black | 0.5 | 0.5 | 0.5 | 0.5 | 0.5 | 0.5 | 2.0 | 0.2 |
| | PVdF | 0.4 | 0.4 | 0.4 | 0.4 | 0.4 | 0.4 | 1.3 | 0.1 |
| | Li₆CoO₄ | 2.0 | 2.0 | 2.0 | 2.0 | 2.4 | 1.0 | 2.0 | 2.0 |
| Total amount | | 100 | 100 | 100 | 100 | 100 | 100 | 100 | 100 |
| SCM₁ₛₜ/SCM_{2nd} | | 0.25 | 0.25 | 0.25 | 0.25 | 0.04 | 1.5 | 0.25 | 0.25 |
| D₁ₛₜ/D_{2nd} | | 5 | 5 | 5 | 5 | 5 | 5 | 0.5 | 16 |
| First negative electrode mixture layer | Graphite | 46.5 | 41.51 | 79 | 10 | 41.51 | 41.51 | 41.51 | 41.51 |
| | Silicon (Si)-containing particles | 2.5 | 7.5 | 0 | 9 | 7.5 | 7.5 | 7.5 | 7.5 |
| | SBR | 1 | 1 | 1 | 1 | 1 | 1 | 1 | 1 |
| Second negative electrode mixture layer | Graphite | 46.5 | 41.51 | 10 | 79 | 41.51 | 41.51 | 41.51 | 41.51 |
| | Silicon (Si)-containing particles | 2.5 | 7.5 | 9 | 0 | 7.5 | 7.5 | 7.5 | 7.5 |
| | SBR | 1 | 1 | 1 | 1 | 1 | 1 | 1 | 1 |

### Experimental Example.

In order to evaluate the performance of the electrode assembly manufactured according to the present disclosure, experiments were conducted as follows.

### A) Measurement of gas emission

Charging and discharging (formation) of the cells fabricated according to Example 2 and Comparative Examples 1 to 4 were performed one time at 25 °C under a condition of 0.1C/0.1C, the amount and component of gas generated during the charging and discharging were analyzed, and results thereof are shown in the following Table 2.

**[Table 2]**

| Units: mL/g | Example 2 | Comparative Example 1 | Comparative Example 2 | Comparative Example 3 | Comparative Example 4 |
|---|---|---|---|---|---|
| Amount of gas generated during initial charging and discharging | 102.1 | 110.7 | 102.7 | 104.3 | 109.8 |

As shown in Table 2, in the case of the electrode assembly according to Example 2 of the present disclosure, the amount of gas generated during initial charging and discharging of the battery was reduced to below 103 mL/g.

From this result, it can be seen that the electrode assembly according to the present disclosure exhibits a reduced amount of gas generated during initial charging and discharging, and thus the stability and efficiency of the battery are enhanced.

### B) Evaluation of electrical performance

The cells fabricated according to Examples and Comparative Examples were charged at 25 °C at a charge current of 0.05C up to a final voltage of 4.2 to 4.25 V and charged at 0.02 V up to a current density of 0.01C. Then, the cells were discharged at a discharge current of 0.05C to a final voltage of 2 V, the charge/discharge capacity per unit mass and resistance of the electrode were measured, and then initial efficiency and capacity retention rates were calculated using the measured charge/discharge capacity and the following Expression 3 and Expression 4. After the first cycle, charging and discharging were performed at a current of 0.5C and repeated for 400 cycles, then the resistance of the electrode was measured to calculate a resistance change rate, and a capacity retention rate after 400-cycle charging and discharging was calculated by the following Expression 3. Results thereof are shown in Table 3 below. [Expression 3] 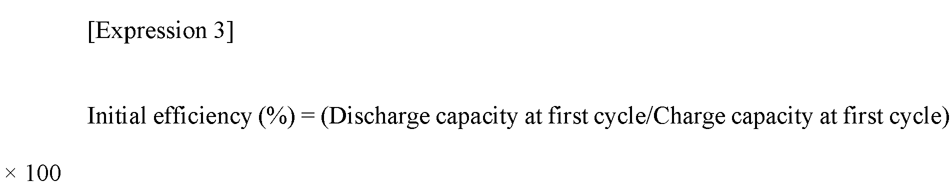 Initial efficiency (%) = (Discharge capacity at first cycle/Charge capacity at first cycle) × 100 [Expression 4] 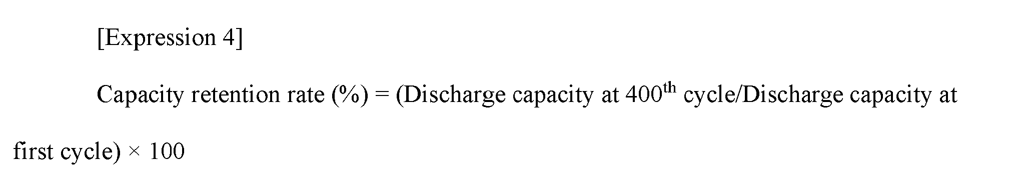 Capacity retention rate (%) = (Discharge capacity at 400th cycle/Discharge capacity at first cycle) × 100

**[Table 3]**

| | 1-cycle charging and discharging (≒ Initial charging and discharging) | | 400-cycle charging and discharging | |
|---|---|---|---|---|
| | Charge/discharge capacity [mAh] | Efficiency [%] | Charge/discharge capacity retention rate [%] | Electrode resistance change rate [%] |
| Example 1 | 4050±5 | 80.0 | 90.8 | <10 |
| Example 2 | 4080±5 | 81.2 | 92.5 | <10 |
| Example 3 | 4088±5 | 81.2 | 92.8 | <10 |
| Example 4 | 4048±5 | 81.1 | 92.3 | <10 |
| Comparative Example 1 | 4084±5 | 79.3 | 89.1 | 14 |
| Comparative Example 2 | 4043±5 | 78.2 | 86.4 | 13 |
| Comparative Example 3 | 4045±5 | 78.6 | 88.1 | 12 |
| Comparative Example 4 | 4090±5 | 79.6 | 87.2 | 15 |

As shown in Table 3, it can be seen that the electrode assemblies according to Examples of the present disclosure have an effect of enhancing the performance of the battery.

Specifically, the electrode assemblies of Examples exhibit high initial charge/discharge capacity and high efficiency, and the charge/discharge capacity was maintained at high levels even after 400-cycle charging and discharging.

From this result, since the electrode assembly according to the present disclosure includes a positive electrode in which a positive electrode mixture layer includes a specific positive electrode active material and a specific positive electrode additive and a negative electrode in which a negative electrode mixture layer includes a specific amount of graphite mixed with silicon (Si)-containing particles, the amount of gas generated during charging and discharging of the battery is reduced, the resistance change rate of the electrode is low even after charging and discharging, and accordingly, a lithium secondary battery including the electrode assembly has a high energy density, a long lifetime, and good quick charging efficiency.

## Claims

1. An electrode assembly, comprising:
a positive electrode having a positive electrode mixture layer, wherein the positive electrode mixture layer comprises a positive electrode active material comprising a lithium nickel cobalt oxide represented by the following Chemical Formula 1, and a positive electrode additive including at least one of a lithium cobalt oxide represented by the following Chemical Formula 2 or a lithium iron oxide represented by the following Chemical Formula 3, wherein the positive electrode active material is present in an amount of 85 to 95 parts by weight with respect to 100 parts by weight of the positive electrode mixture layer, and wherein the positive electrode additive is present in an amount of 0.1 to 5 parts by weight with respect to 100 parts by weight of the positive electrode mixture layer;
a negative electrode having a negative electrode mixture layer, wherein the negative electrode mixture layer comprises a negative electrode active material, wherein the negative electrode active material includes graphite in an amount of 80 to 95 parts by weight and Si-containing particles in an amount of 1 to 20 parts by weight with respect to 100 parts by weight of a negative electrode active material;
a separator interposed between the positive electrode and the negative electrode; and
**characterized in that** the positive electrode mixture layer further comprises a first positive electrode mixture layer and a second positive electrode mixture layer that are sequentially stacked on a positive electrode current collector and satisfies the following Expression 1 and Expression 2: [Expression 1] $0.05 \leq {SCM}_{1 st} / {SCM}_{2 nd} \leq 0.9$ [Expression 2] $2 \leq {D}_{1 st} / {D}_{2 nd} \leq 15$
in Expression 1,
SCM₁ₛₜ represents an amount of the positive electrode additive included in the first positive electrode mixture layer, and
SCM_{2nd} represents an amount of the positive electrode additive included in the second positive electrode mixture layer,
in Expression 2,
D₁ₛₜ represents an average thickness of the first positive electrode mixture layer, and
D_{2nd} represents an average thickness of the second positive electrode mixture layer:
[Chemical Formula 1] Liₓ[Ni_{y}Co_{z}Mn_{w}M¹ᵥ]O₂
[Chemical Formula 2] LiₚCo_{1-q}M²_{q}O₄
[Chemical Formula 3] LiₐFe_{1-b}M³_{b}O₄
in Chemical Formula 1 to Chemical Formula 3,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
1.0≤x≤1.30, 0≤y<1, 0<z≤0.6, 0<w≤0.6, and 0≤v≤0.2,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
5≤p≤7 and 0≤q≤0.2,
M³ is one or more selected from among Al, Mg, Ni, Co, Mn, Ti, Ga, Cu, V, Nb, Zr, Ce, In, Zn, and Y, and
4≤a≤6 and 0≤b≤0.5.

2. The electrode assembly of claim 1, wherein the positive electrode mixture layer further comprises a first positive electrode mixture layer and a second positive electrode mixture layer that are sequentially stacked on a positive electrode current collector and satisfies the following Expression 1: [Expression 1] $0.2 \leq {SCM}_{1 st} / {SCM}_{2 nd} \leq 0.8$ in Expression 1,
SCM₁ₛₜ represents an amount of the positive electrode additive included in the first positive electrode mixture layer, and
SCM_{2nd} represents an amount of the positive electrode additive included in the second positive electrode mixture layer.

3. The electrode assembly of claim 1, wherein the positive electrode mixture layer satisfies the following Expression 2: [Expression 2] $2 \leq {D}_{1 st} / {D}_{2 nd} \leq 8$ in Expression 2,
D₁ₛₜ represents an average thickness of the first positive electrode mixture layer, and
D_{2nd} represents an average thickness of the second positive electrode mixture layer.

4. The electrode assembly of claim 1, wherein the positive electrode mixture layer has an average thickness of 100 µm to 200 µm.

5. The electrode assembly of claim 1, wherein the positive electrode mixture layer further comprises one or more conductive materials selected from the group consisting of natural graphite, artificial graphite, carbon black, acetylene black, Ketjen black, and a carbon fiber.

6. The electrode assembly of claim 5, wherein the conductive material is present in an amount of 0.1 to 10 parts by weight with respect to 100 parts by weight of the positive electrode mixture layer.

7. The electrode assembly of claim 1, wherein one or both of the positive electrode mixture layer and the negative electrode mixture layer include one or more binders selected from the group consisting of a vinylidene fluoride-hexafluoropropylene copolymer, polyvinylidene fluoride, polyacrylonitrile, polymethyl methacrylate, polyvinyl alcohol, carboxymethylcellulose, starch, hydroxypropyl cellulose, regenerated cellulose, polyvinylpyrrolidone, polytetrafluoroethylene, polyethylene, polypropylene, polyacrylic acid, an ethylene-propylene-diene monomer, a sulfonated ethylene-propylene-diene monomer, styrene butadiene rubber, and fluoro-rubber.

8. The electrode assembly of claim 7, wherein the binder is present in an amount of 0.1 to 10 parts by weight with respect to 100 parts by weight of the positive electrode mixture layer or the negative electrode mixture layer.

9. The electrode assembly of claim 1, wherein the negative electrode mixture layer comprises the Si-containing particles in an amount of 1 to 9 parts by weight with respect to 100 parts by weight of a negative electrode active material.

10. The electrode assembly of claim 1, wherein the negative electrode mixture layer comprises the Si-containing particles in an amount of 11 to 19 parts by weight with respect to 100 parts by weight of a negative electrode active material.

11. The electrode assembly of claim 1, wherein the Si-containing particles comprise one or more of silicon (Si) particles, silicon monoxide (SiO) particles, and silicon dioxide (SiO₂) particles.

12. The electrode assembly of claim 11, wherein the Si-containing particles further comprise silicon carbide (SiC) particles.

13. The electrode assembly of claim 1, wherein the Si-containing particles have an average particle size of 0.01 µm to 10 µm.

14. A lithium secondary battery comprising the electrode assembly of any one of claims 1 to 13.

15. A battery module comprising the lithium secondary battery of claim 14.

## Patentansprüche

1. Elektrodenanordnung, umfassend:
eine positive Elektrode, die eine Positivelektroden-Mischungsschicht aufweist, worin die Positivelektroden-Mischungsschicht ein Positivelektroden-Aktivmaterial, das ein durch die folgende chemische Formel 1 dargestelltes Lithium-Nickel-Kobalt-Oxid umfasst, und ein Positivelektroden-Additiv umfasst, das zumindest eines von einem durch die folgende chemische Formel 2 dargestelltem Lithium-Kobalt-Oxid oder einem durch die folgende Formel 3 dargestelltem Lithium-Eisen-Oxid umfasst, worin das Positivelektroden-Aktivmaterial in einer Menge von 85 bis 95 Gewichtsteilen vorliegt, bezogen auf 100 Gewichtsteile der Positivelektroden-Mischungsschicht, und worin das Positivelektroden-Additiv in einer Menge von 0,1 bis 5 Gewichtsteilen vorliegt, bezogen auf 100 Gewichtsteile der Positivelektroden-Mischungsschicht;
eine negative Elektrode, die eine Negativelektroden-Mischungsschicht aufweist, worin die Negativelektroden-Mischungsschicht ein Negativelektroden-Aktivmaterial umfasst, worin das Negativelektroden-Aktivmaterial Graphit in einer Menge von 80 bis 95 Gewichtsteilen und Si-haltige Partikel in einer Menge von 1 bis 20 Gewichtsteilen umfasst, bezogen auf 100 Gewichtsteile des Negativelektroden-Aktivmaterials;
einen zwischen der positiven Elektrode und der negativen Elektrode vorgesehenen Separator; und
**dadurch gekennzeichnet, dass** die Positivelektroden-Mischungsschicht ferner eine erste Positivelektroden-Mischungsschicht und eine zweite Positivelektroden-Mischungsschicht umfasst, die sequentiell auf einen Positivelektroden-Stromabnehmer gestapelt sind, und den folgenden Ausdruck 1 und Ausdruck 2 erfüllt: [Ausdruck 1] $0,5 \leq {SCM}_{1 st} / {SCM}_{2 nd} \leq 0 , 9$ [Ausdruck 2] $2 \leq {D}_{1 st} / {D}_{2 nd} \leq 15$
worin im Ausdruck 1
SCM₁ₛₜ die Menge des in der ersten Positivelektroden-Mischungsschicht enthaltenen Positivelektroden-Additivs darstellt, und
SCM_{2nd} die Menge des in der zweiten Positivelektroden-Mischungsschicht enthaltenen Positivelektroden-Additivs darstellt,
im Ausdruck 2
D₁ₛₜ die mittlere Dicke der ersten Positivelektroden-Mischungsschicht darstellt und
D_{2nd} die mittlere Dicke der zweiten Positivelektroden-Mischungsschicht darstellt,
[Chemische Formel 1] Liₓ[Ni_{y}Co_{z}Mn_{w}M¹ᵥ]O₂
[Chemische Formel 2] LiₚCo_{1-q}M²_{q}O₄
[Chemische Formel 3] LiₐFe_{1-b}M³_{b}O₄
worin in den chemischen Formeln 1 bis 3
M¹ eines oder mehr Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo,
0,1≤x≤1,30, 0≤y<1, 0<z≤0,6, 0<w≤0,6 und 0≤v≤0,2,
M² ein oder mehrere Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo,
5≤p≤7 und 0≤q≤0, 2,
M³ eine oder mehrere ist, ausgewählt unter Al, Mg, Ni, Co, Mn, Ti, Ga, Cu, V, Nb, Zr, Ce, In, Zn und Y, und
4≤a≤6 und 0≤b≤0,5.

2. Elektrodenanordnung gemäß Anspruch 1, worin die Positivelektroden-Mischungsschicht ferner eine erste Positivelektroden-Mischungsschicht und eine zweite Positivelektroden-Mischungsschicht umfasst, die sequentielle auf einem Positivelektroden-Stromabnehmer gestapelt sind und den folgenden Ausdruck 1 erfüllt: [Ausdruck 1] $0,2 \leq {SCM}_{1 st} / {SCM}_{2 nd} \leq 0 , 8$ worin im Ausdruck 1
SCM₁ₛₜ die Menge des in der ersten Positivelektroden-Mischungsschicht enthaltenen Positivelektroden-Additivs darstellt, und
SCM_{2nd} die Menge des in der zweiten Positivelektroden-Mischungsschicht enthaltenen Positivelektroden-Additivs darstellt,

3. Elektrodenanordnung gemäß Anspruch 1, worin die Positivelektroden-Mischungsschicht den folgenden Ausdruck 2 erfüllt: [Ausdruck 2] $2 \leq {D}_{1 st} / {D}_{2 nd} \leq 15$ worin im Ausdruck 2
D₁ₛₜ die mittlere Dicke der ersten Positivelektroden-Mischungsschicht darstellt und
D_{2nd} die mittlere Dicke der zweiten Positivelektroden-Mischungsschicht darstellt.

4. Elektrodenanordnung gemäß Anspruch 1, worin die Positivelektroden-Mischungsschicht eine mittlere Dicke von 100 µm bis 200 µm aufweist.

5. Elektrodenanordnung gemäß Anspruch 1, worin die Positivelektroden-Mischungsschicht ferner eines oder mehrere leitfähige Materialien umfasst, ausgewählt aus der Gruppe bestehend aus natürlichem Graphit, künstlichem Graphit, Ruß, Acetylenruß, Ketjen-Ruß und einer Kohlefaser.

6. Elektrodenanordnung gemäß Anspruch 5, worin das leitfähige Material in einer Menge von 0,1 bis 10 Gewichtsteilen vorliegt, bezogen auf 100 Gewichtsteile der Positivelektroden-Mischungsschicht.

7. Elektrodenanordnung gemäß Anspruch 1, worin eine oder beide von der Positivelektroden-Mischungsschicht und der Negativelektroden-Mischungsschicht eines oder mehrere Bindemittel umfasst, ausgewählt aus der Gruppe bestehend aus einem Vinylidenfluorid-Hexafluorpropylen-Copolymer, Polyvinylidenfluorid, Polyacrylonitril, Polymethylmethacrylat, Polyvinylalkohol, Carboxymethylcellulose, Stärke, Hydroxypropylencellulose, regenerierte Cellulose, Polyvinylpyrrolidon, Polytetrafluorethylen, Polyethylen, Polypropylen, Polyacrylsäure, einem Ethylen-Propylen-Dien-Monomer, einem sulfonierten Ethylen-Propylen-Dien-Monomer, Styrolbutadienkautschuk und Fluorkautschuk.

8. Elektrodenanordnung gemäß Anspruch 7, worin das Bindemittel in einer Menge von 0,1 bis 10 Gewichtsteilen vorliegt, bezogen auf 100 Gewichtsteile der Positivelektroden-Mischungsschicht oder der Negativelektroden-Mischungsschicht.

9. Elektrodenanordnung gemäß Anspruch 1, worin die Negativelektroden-Mischungsschicht die Si-haltigen Partikel in einer Menge von 1 bis 9 Gewichtsteilen umfasst, bezogen auf 100 Gewichtsteile des Negativelektroden-Aktivmaterials.

10. Elektrodenanordnung gemäß Anspruch 1, worin die Negativelektroden-Mischungsschicht die Si-haltigen Partikel in einer Menge von 11 bis 19 Gewichtsteilen umfasst, bezogen auf 100 Gewichtsteile des Negativelektroden-Aktivmaterials.

11. Elektrodenanordnung gemäß Anspruch 1, worin die Si-haltigen Partikel eines oder mehrere von Silicium (Si)-Partikeln, Siliciummonoxid (SiO)-Partikeln und Siliciumdioxid (SiO₂)-Partikeln umfassen.

12. Elektrodenanordnung gemäß Anspruch 11, worin die Si-haltigen Partikel ferner Siliciumcarbid (SiC)-Partikel umfassen.

13. Elektrodenanordnung gemäß Anspruch 1, worin die Si-haltigen Partikel eine mittlere Partikelgröße von 0,01 µm bis 10 µm aufweisen.

14. Lithium-Sekundärbatterie, umfassend die Elektrodenanordnung gemäß irgendeinem der Ansprüche 1 bis 13.

15. Batteriemodul, umfassend die Lithium-Sekundärbatterie gemäß Anspruch 14.

## Revendications

1. Ensemble électrode, comprenant :
une électrode positive présentant une couche de mélange d'électrode positive, dans lequel la couche de mélange d'électrode positive comprend un matériau actif d'électrode positive comprenant un oxyde de lithium-nickel-cobalt représenté par la formule chimique 1 suivante, et un additif d'électrode positive incluant au moins l'un parmi un oxyde de lithium-cobalt représenté par la formule chimique 2 suivante ou un oxyde de lithium-fer représenté par la formule chimique 3 suivante, dans lequel le matériau actif d'électrode positive est présent en une quantité de 85 à 95 parties en poids par rapport à 100 parties en poids de la couche de mélange d'électrode positive, et dans lequel l'additif d'électrode positive est présent en une quantité de 0,1 à 5 parties en poids par rapport à 100 parties en poids de la couche de mélange d'électrode positive ;
une électrode négative présentant une couche de mélange d'électrode négative, dans lequel la couche de mélange d'électrode négative comprend un matériau actif d'électrode négative, dans lequel le matériau actif d'électrode négative inclut du graphite en une quantité de 80 à 95 parties en poids et des particules contenant du Si en une quantité de 1 à 20 parties en poids par rapport à 100 parties en poids d'un matériau actif d'électrode négative ;
un séparateur interposé entre l'électrode positive et l'électrode négative ; et
**caractérisé en ce que** la couche de mélange d'électrode positive comprend en outre une première couche de mélange d'électrode positive et une deuxième couche de mélange d'électrode positive qui sont empilées séquentiellement sur un collecteur de courant d'électrode positive et satisfait à l'expression 1 et à l'expression 2 suivantes : [Expression 1] $0,05 \leq {SCM}_{1 re} / {SCM}_{2 e} \leq 0 , 9$ [Expression 2] $2 \leq {D}_{1 re} / {D}_{2 e} \leq 15$
dans l'expression 1,
SCM₁ᵣₑ représente une quantité de l'additif d'électrode positive inclus dans la première couche de mélange d'électrode positive, et
SCM₂ₑ représente une quantité de l'additif d'électrode positive inclus dans la deuxième couche de mélange d'électrode positive,
dans l'expression 2,
D₁ᵣₑ représente une épaisseur moyenne de la première couche de mélange d'électrode positive, et D₂ₑ représente une épaisseur moyenne de la deuxième couche de mélange d'électrode positive :
[Formule chimique 1] Liₓ[Ni_{y}Co_{z}Mn_{w}M¹ᵥ]O₂
[Formule chimique 2] LiₚCo_{1-q}M²_{q}O₄
[Formule chimique 3] LiₐFe_{1-b}M³_{b}O₄
dans les formules chimiques 1 à 3 :
M¹ est un ou plusieurs éléments sélectionnés dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo,
1,0 ≤ x ≤ 1,30, 0 ≤ y < 1, 0 ≤ z ≤ 0,6, 0 ≤ w ≤ 0,6 et 0 ≤ v ≤ 0,2,
M² est un ou plusieurs éléments sélectionnés dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo,
5 ≤ p ≤ 7 et 0 ≤ q ≤ 0,2,
M³ est un ou plusieurs éléments sélectionnés parmi AI, Mg, Ni, Co, Mn, Ti, Ga, Cu, V, Nb, Zr, Ce, In, Zn et Y, et
4 ≤ a ≤ 6 et 0 ≤ b ≤ 0,5.

2. Ensemble électrode selon la revendication 1, dans lequel la couche de mélange d'électrode positive comprend en outre une première couche de mélange d'électrode positive et une deuxième couche de mélange d'électrode positive qui sont empilées séquentiellement sur un collecteur de courant d'électrode positive et satisfait à l'expression 1 suivante : [Expression 1] $0 , 2 \leq {SCM}_{1 re} / {SCM}_{2 e} \leq 0 , 8$ dans l'expression 1,
SCM₁ᵣₑ représente une quantité de l'additif d'électrode positive inclus dans la première couche de mélange d'électrode positive, et
SCM₂ₑ représente une quantité de l'additif d'électrode positive inclus dans la deuxième couche de mélange d'électrode positive.

3. Ensemble électrode selon la revendication 1, dans lequel la couche de mélange d'électrode positive satisfait à l'expression 2 suivante : [Expression 2] $2 \leq {D}_{1 re} / {D}_{2 e} \leq 8$ dans l'expression 2,
D₁ᵣₑ représente une épaisseur moyenne de la première couche de mélange d'électrode positive, et
D₂ₑ représente une épaisseur moyenne de la deuxième couche de mélange d'électrode positive.

4. Ensemble électrode selon la revendication 1, dans lequel la couche de mélange d'électrode positive présente une épaisseur moyenne de 100 µm à 200 µm.

5. Ensemble électrode selon la revendication 1, dans lequel la couche de mélange d'électrode positive comprend en outre un ou plusieurs matériaux conducteurs sélectionnés dans le groupe consistant en le graphite naturel, le graphite artificiel, le noir de carbone, le noir d'acétylène, le noir de Ketjen et une fibre de carbone.

6. Ensemble électrode selon la revendication 5, dans lequel le matériau conducteur est présent en une quantité de 0,1 à 10 parties en poids par rapport à 100 parties en poids de la couche de mélange d'électrode positive.

7. Ensemble électrode selon la revendication 1, dans lequel l'une ou les deux de la couche de mélange d'électrode positive et de la couche de mélange d'électrode négative incluent un ou plusieurs liants sélectionnés dans le groupe consistant en un copolymère de fluorure de vinylidène-hexafluoropropylène, le fluorure de polyvinylidène, le polyacrylonitrile, le polyméthacrylate de méthyle, l'alcool polyvinylique, la carboxyméthylcellulose, l'amidon, l'hydroxypropylcellulose, la cellulose régénérée, la polyvinylpyrrolidone, le polytétrafluoroéthylène, le polyéthylène, le polypropylène, l'acide polyacrylique, un monomère d'éthylène-propylène-diène, un monomère d'éthylène-propylène-diène sulfoné, le caoutchouc styrène-butadiène et le caoutchouc fluoré.

8. Ensemble électrode selon la revendication 7, dans lequel le liant est présent en une quantité de 0,1 à 10 parties en poids par rapport à 100 parties en poids de la couche de mélange d'électrode positive ou de la couche de mélange d'électrode négative.

9. Ensemble électrode selon la revendication 1, dans lequel la couche de mélange d'électrode négative comprend les particules contenant du Si en une quantité de 1 à 9 parties en poids par rapport à 100 parties en poids d'un matériau actif d'électrode négative.

10. Ensemble électrode selon la revendication 1, dans lequel la couche de mélange d'électrode négative comprend les particules contenant du Si en une quantité de 11 à 19 parties en poids par rapport à 100 parties en poids d'un matériau actif d'électrode négative.

11. Ensemble électrode selon la revendication 1, dans lequel les particules contenant du Si comprennent un ou plusieurs éléments parmi des particules de silicium (Si), des particules de monoxyde de silicium (SiO) et des particules de dioxyde de silicium (SiO₂).

12. Ensemble électrode selon la revendication 11, dans lequel les particules contenant du Si comprennent en outre des particules de carbure de silicium (SiC).

13. Ensemble électrode selon la revendication 1, dans lequel les particules contenant du Si présentent une taille moyenne de particules de 0,01 µm à 10 µm.

14. Batterie secondaire au lithium comprenant l'ensemble électrode selon l'une quelconque des revendications 1 à 13.

15. Module de batterie comprenant la batterie secondaire au lithium selon la revendication 14.
